# EUROPÄISCHE PATENTANMELDUNG

(11) **EP 1 801 618 A2**
(43) Veröffentlichungstag der Anmeldung: **27.06.2007**
(21) Anmeldenummer: 06026241.7
(22) Anmeldetag: 19.12.2006
(51) Int. Cl.: G01V 8/20

(54) **Optoelektronische Vorrichtung**

(30) Priorität: 24.12.2005 DE 102005062320
(71) Anmelder: Leuze electronic GmbH + Co. KG, 73277 Owen/Teck (DE)
(72) Erfinder: Argast, Martin, 72584 Hülben (DE); Albrecht Graf van Pfeil, 73277 Owen/Teck (DE); Bernhard Müller, 71083 Herrenberg (DE)
(74) Vertreter: Ruckh, Rainer Gerhard

(57) **Zusammenfassung**

Die Erfindung betrifft eine optoelektronische Vorrichtung (1). Diese umfasst einen Sendelichtstrahlen (3) emittierenden Sender (2) und einen Empfangslichtstrahlen (4) empfangenden, aus einer Anordnung von Empfangselementen (5a) bestehenden Empfänger (5). Der Auftreffpunkt der von einem Objekt (6) als Empfangslichtstrahlen (4) rückreflektierten Sendelichtstrahlen (3) stellt auf den Empfangselementen (5a) des Empfängers (5) ein Maß für die Objektdistanz dar. Die Ausgangssignale der Empfangselemente (5a) werden mit einer Gewichtungsfunktion gewichtet und die Summe der gewichteten Ausgangssignale zur Generierung eines binären Schaltsignals mit einem Schwellwert bewertet.

## Beschreibung

Die Erfindung betrifft eine optoelektronische Vorrichtung gemäß dem Oberbegriff des Anspruchs 1.

Eine derartige optoelektronische Vorrichtung ist aus der DE 199 07 547 A1 bekannt. Die dort beschriebene optoelektronische Vorrichtung bildet einen nach dem Triangulationsprinzip arbeitenden Sensor und umfasst einen Sendelichtstrahlen emittierenden Sender sowie einen Empfangslichtstrahlen empfangenden Empfänger, der aus einer zeilenförmigen Anordnung von Empfangselementen besteht. Je nach Distanz eines Objekts zum Sensor variiert der Auftreffpunkt der von einem Objekt als Empfangslichtstrahlen zurückreflektierten Empfangslichtstrahlen auf der Empfängerzeile, das heißt die Lage des Empfangslichtflecks auf der Empfängerzeile stellt ein Maß für die Objektdistanz dar. Die Empfangselemente des Empfängers sind einerseits zu einem Nahelement und andererseits zu einem Fernelement zusammengeschaltet. Dabei treffen die von Objekten rückreflektierten Empfangslichtstrahlen bei geringen Objektdistanzen auf das Nahelement und bei großen Distanzen auf das Femelement. Durch die Bewertung des Verhältnisses der Ausgangssignale des Nah-und Fernelements wird ein Objektfeststellungssignal generiert, dessen Schaltzustände angeben, ob sich ein Objekt in einem von einer Tastweite begrenzten Distanzbereich befindet oder nicht. Die Tastweite ist dabei durch die Einteilung der Empfangselemente in das Nahelement und das Fernelement bestimmt. Da die Empfangselemente fest vorgegeben entweder dem Nah- oder Fernelement zugeordnet, ist durch die Breiten der Empfangselemente auch die Genauigkeit der Einstellung der Tastweite vorgegeben und beschränkt.

Der Erfindung liegt die Aufgabe zugrunde eine optoelektronische Vorrichtung der eingangs genannten Art bereitzustellen, welche bei kostengünstigem Aufbau eine verbesserte Nachweisempfindlichkeit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße optoelektronische Vorrichtung umfasst einen Sendelichtstrahlen emittierenden Sender und einen Empfangslichtstrahlen empfangenden, aus einer Anordnung von Empfangselementen bestehenden Empfänger. Der Auftreffpunkt der von einem Objekt als Empfangslichtstrahlen rückreflektierten Sendelichtstrahlen stellt auf den Empfangselementen des Empfängers ein Maß für die Objektdistanz dar. Die Ausgangssignale der Empfangselemente werden mit einer Gewichtungsfunktion gewichtet und die Summe der gewichteten Ausgangssignale zur Generierung eines binären Schaltsignals mit einem Schwellwert bewertet.

Durch die erfindungsgemäße Gewichtung der Empfangselemente mit der Gewichtungsfunktion können Distanzbereiche, innerhalb derer Objekte mit der optoelektronischen Vorrichtung erfasst werden sollen, flexibel und hochgenau vorgegeben werden, das heißt die erfindungsgemäße optoelektronische Vorrichtung weist eine hohe Nachweisempfindlichkeit auf.

Ein wesentlicher Vorteil der erfindungsgemäßen optoelektronischen Vorrichtung besteht darin, dass zur Vorgabe des oder der Distanzbereiche, innerhalb derer Objekte erfasst werden sollen, keine fest vorgegebene Einteilung der Empfangselemente des Empfängers in fest vorgegebene Zonen vorgenommen werden muss. Die Vorgabe von Distanzbereichen erfolgt vielmehr über die Gewichtungsfunktion. Dabei kann diese generell so gewählt werden, dass eine Subpixelauflösung möglich wird, das heißt die Genauigkeit von den oder die Distanzbereiche begrenzenden Tastweiten ist nicht mehr durch die Dimensionen der diskreten Empfangselemente des Empfängers begrenzt.

Besonders vorteilhaft wird die Gewichtungsfunktion so gewählt, dass deren Nulldurchgang oder deren Nulldurchgänge die Tastweite oder die Tastweiten, die den Distanzbereich begrenzen, innerhalb derer Objekte mit der optoelektronischen Vorrichtung erfasst werden sollen, definieren.

Zur Bildung der Gewichtungsfunktion werden dabei vorteilhaft die Ausgangssignale der Empfangselemente jeweils mit einem Gewichtungsfaktor gewichtet. Diese gewichteten Ausgangssignale bilden Stützstellen, zwischen welchen eine Interpolation zur Generierung der Gewichtungsfunktion durchgeführt wird.

Bei der so gebildeten Gewichtungsfunktion sind somit die Lagen der Nulldurchgänge der Gewichtungsfunktion nicht durch die diskreten Abmessungen der Empfangselemente vorgegeben, das heißt es wird eine Subpixelauflösung bei der Definition der Tastweite erhalten.

In einer besonders vorteilhaften Ausführungsform des erfindungsgemäßen Auswerteverfahrens wird die Gewichtungsfunktion in einem Einlernvorgang bestimmt, wobei während des Einlernvorgangs ein in einer Tastweite angeordnetes Objekt detektiert wird. Die Gewichtungsfunktion wird dann aus dem Verlauf der bei dem Einlernvorgang erhaltenen Ausgangssignale der Empfangselemente abgeleitet. Vorteilhaft entspricht der Verlauf der Gewichtungsfunktion dabei zumindest näherungsweise dem Differential des Verlaufs der Ausgangssignale.

Der Nulldurchgang der Gewichtungsfunktion fällt damit mit dem Maximum der Ausgangssignale der Empfangselemente zusammen und definiert somit exakt die Tastweite, in der das während dem Einlernvorgang detektierte Objekt angeordnet ist.

Besonders erfolgt die Wahl der Gewichtungsfunktion derart, dass die Summe der beim Einlernvorgang erhaltenen gewichteten Ausgangssignale die Summe Null ergibt.

Mit der so ausgebildeten Gewichtungsfunktion werden die Ausgangssignale der Empfangselemente, die jeweils in einem schmalen Bereich beidseits des Nulldurchgangs liegen, am stärksten gewichtet. Die Ausgangssignale der Empfangselemente in den anschließenden Randbereichen des Empfängers werden besonders schwach gewichtet. Dadurch werden Störeinflüsse durch Fremdlichteinstrahlung auf dem Empfänger effizient reduziert.

Zur weiteren Erhöhung der Nachweisempfindlichkeit kann die Gewichtungsfunktion zusätzlich an den abstandsabhängigen Verlauf der Intensitäten der Ausgangssignale der Empfangselemente angepasst werden. Weiter kann die Gewichtungsfunktion an die einzelnen, gegebenenfalls variierenden Empfindlichkeiten der Empfangselemente angepasst werden.

Bei der Durchführung eines Einlernvorgangs, bei welchem ein Objekt in einer Tastweite detektiert wird, wird mit der Gewichtungsfunktion ein Distanzbereich, innerhalb derer Objekte erfasst werden, definiert, der zu großen oder kleinen Distanzen hin durch diese Tastweiten begrenzt ist, das heißt mit der so ausgebildeten optoelektronischen Vorrichtung erfolgt eine Hintergrund- oder Vordergrundausblendung.

Vorteilhaft kann der Betrieb der optoelektronischen Vorrichtung so erweitert werden, dass mit diesem Objekt in einem Distanzbereich erfasst werden, der von einer unteren und oberen Tastweite begrenzt ist. Dieser Distanzbereich kann wiederum durch eine geeignete Gewichtungsfunktion definiert werden. In diesem Fall sind zur Bestimmung der Gewichtungsfunktion zwei Einlemvorgänge notwendig, wobei in einem ersten Einlernvorgang ein in der unteren Tastweite angeordnetes Objekt und in einem zweiten Einlernvorgang ein in der oberen Tastweite angeordnetes Objekt detektiert wird.

Besonders vorteilhafte Varianten der Auswerteschaltung der erfindungsgemäßen optoelektronischen Vorrichtung sind in den Ansprüchen 9 bis 13 sowie 14 bis 17 beschrieben. Generell bildet die Auswerteschaltung ein Schaltnetzwerk, dessen Einstellung durch die Vorgabe der im Einlernvorgang bestimmten Gewichtungsfunktion vorgenommen wird. Bei der auf den Einlernvorgang folgenden Objektdetektion erfolgt die Auswertung zur Generierung des Schaltsignals durch einfache Schaltprozesse in der Auswerteschaltung, das heißt ohne jeglichen Rechenaufwand.

Die so ausgebildete Auswertung kann daher sehr schnell erfolgen. Weiterhin ist vorteilhaft, dass die Komponenten der Auswertebeschaltung zusammen mit den Empfangselementen des Empfängers in einem ASIC integriert werden können, wodurch die Herstellkosten der optoelektronischen Vorrichtung gering gehalten werden können.

Die Erfindung wird im Nachstehenden anhand der Zeichnungen erläutert.

Es zeigen:
- Figur 1:: Blockschaltbild eines Ausführungsbeispiels der optoelektronischen Vorrichtung.
- Figur 2:: Draufsicht auf den Empfänger der optoelektronischen Vorrichtung gemäß Figur 1.
- Figur 3a-c:: Diagramme zur Ableitung der Gewichtungsfunktion für den Empfänger gemäß Figur 2.
- Figur 4a-c:: Diagramme zur Bestimmung des Schaltsignals für die opto-elektronische Vorrichtung gemäß Figur 1 bei einem im Bereich der Tastweite angeordneten Objekt.
- Figur 5a-c:: Diagramme zur Bestimmung des Schaltsignals für die opto-elektronische Vorrichtung gemäß Figur 1 bei einem entfernt von der Tastweite angeordneten Objekt.
- Figur 6a, b:: Diagramme für eine weitere Definition einer Gewichtungsfunktion für den Empfänger gemäß Figur 2.
- Figur 7a, b:: Diagramme für eine weitere Bestimmung einer Gewichtungsfunktion für den Empfänger gemäß Figur 2.
- Figur 8:: Erstes Ausführungsbeispiel einer Signalverarbeitungseinheit für die optoelektronische Vorrichtung gemäß Figur 1.
- Figur 9a-c:: Erste Zeitdiagramme des Ladungsverlaufes eines Ladungsspeichers der Signalverarbeitungseinheit gemäß Figur 8 in Abhängigkeit des Sendelichts.
- Figur 10a-c:: Zweite Zeitdiagramme des Ladungsverlaufes eines Ladungsspeichers der Signalverarbeitungseinheit gemäß Figur 8 in Abhängigkeit des Sendetakts.
- Figur 11:: Zweites Ausführungsbeispiel einer Signalverarbeitungseinheit für die optoelektronische Vorrichtung gemäß Figur 1.
- Figur 12:: Diagramm für Verstärkungseinstellung und Abgleich der Gewichtungsfunktion für die Anordnung gemäß Figur 11.

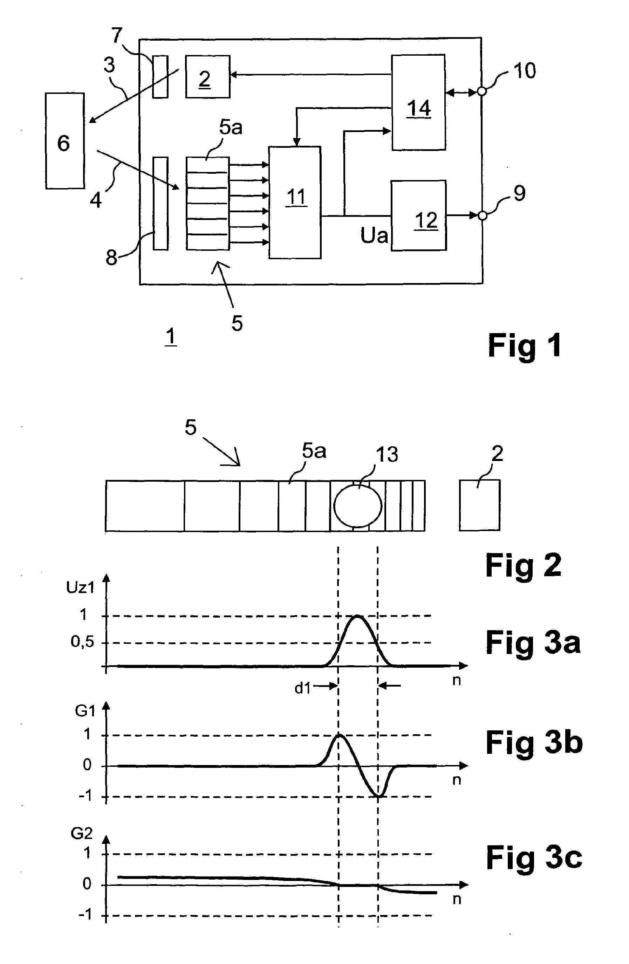

Figur 1 zeigt das Blockschaltbild eines Ausführungsbeispiels der erfindungsgemäßen optoelektronischen Vorrichtung 1. Die optoelektronische Vorrichtung 1 weist einen Sender 2 in Form einer Leuchtdiode auf. Der Sender 2 emittiert Sendelichtstrahlen 3, die in einem Überwachungsbereich zur Objekterfassung geführt sind. Aus dem Überwachungsbereich zurückreflektierte Empfangslichtstrahlen 4 treffen auf einen Empfänger 5, der aus einer zeilenförmigen Anordnung von Empfangselementen 5a besteht. Der Sender 2 und der Empfänger 5 liegen in Abstand zueinander. Die so ausgebildete optoelektronische Vorrichtung 1 bildet einen nach dem Triangulationsprinzip arbeitenden Sensor. Die von einem Objekt 6 zurückreflektierten Empfangslichtstrahlen 4 werden auf den Empfänger 5 gerührt, wobei der Auftreffpunkt der Empfangslichtstrahlen 4 auf dem Empfänger 5 ein Maß für die Objektdistanz darstellt. Zur Strahlformung der Sendelichtstrahlen 3 ist dem Sender 2 eine Sendeoptik 7 nachgeordnet. Zur Fokussierung der Empfangslichtstrahlen 4 auf den Empfänger 5 ist diesem eine Empfangsoptik 8 vorgeordnet.

Mittels der optoelektronischen Vorrichtung 1 wird ein binäres Schaltsignal generiert, dessen Schaltzustände angeben, ob sich ein Objekt 6 in einem bestimmten Distanzbereich innerhalb des Überwachungsbereichs befindet oder nicht. Das Schaltsignal wird über einen Schaltausgang 9 ausgegeben. Zur Eingabe von Parameterwerten ist eine Parametrierschnittstelle 10 vorgesehen.

Eine Signalverarbeitungseinheit 11 gewichtet die einzelnen Ausgangssignale der Empfangselemente 5a mit einer Gewichtungsfunktion durch eine analoge Operation und gibt die summierte Spannung Ua an den Komparator 12 weiter, der das Schaltsignal generiert und am Schaltausgang 9 bereitstellt. Eine Steuereinheit 14 ermittelt in einem Einlernvorgang die Gewichtungsfunktion und stellt sie der Signalverarbeitungseinheit 11 zur Verfügung. Außerdem steuert sie Integrationsphasen der Steuereinheit 14 und die Sendezyklen des Senders 2. Durch die Erstellung der Gewichtungsfunktion G sind im Messbetrieb der optoelektronischen Vorrichtung 1, der auf den Einlernvorgang folgt, keine weiteren Auswerteeinheiten zur Berechnung eines Schaltsignals, wie z.B. Analog-Digital-Wandler und Logikauswertemodule erforderlich. Die Komponenten zur Auswertung der Ausgangssignale der Empfangselemente 5a sowie die Empfangselemente 5a sind vorteilhaft in einem ASIC integriert.

Figur 2 zeigt eine Draufsicht auf die Empfangselemente 5a des Empfängers 5 der optoelektronischen Vorrichtung 1 gemäß Figur 1 mit einem darauf abgebildeten Empfangslichtfleck 13 sowie den in Abstand zum Empfänger 5 liegenden Sender 2. Dabei sind die Zellbreiten der Empfangselemente 5a unterschiedlich und vorzugsweise so ausgelegt, dass der Empfangslichtfleck 13 gerade 2-3 Zellen (Empfangselemente) belichtet, unabhängig davon, in welcher Distanz ein Objekt 6, von dem die Empfangslichtstrahlen 4 zurückreflektiert werden, angeordnet ist.

Zur Ermittlung der Gewichtungsfunktion wird in einem Einlernvorgang mittels der optoelektronischen Vorrichtung 1 ein Objekt 6 detektiert, das in einem Abstand angeordnet ist, der der gewünschten Tastweite entspricht, welche den Distanzbereich begrenzt, innerhalb dessen Objekte 6 detektiert werden sollen. Der dabei erhaltene Verlauf der Ausgangssignale U_{Z1} der Empfangselemente 5a des Empfängers 5 gemäß Figur 2 ist in Figur 3a dargestellt. Entsprechend der Breite des Empfangslichtflecks 13 wird als Ausgangssignal U_{Z1} ein Signalpeak der Breite d 1 erhalten.

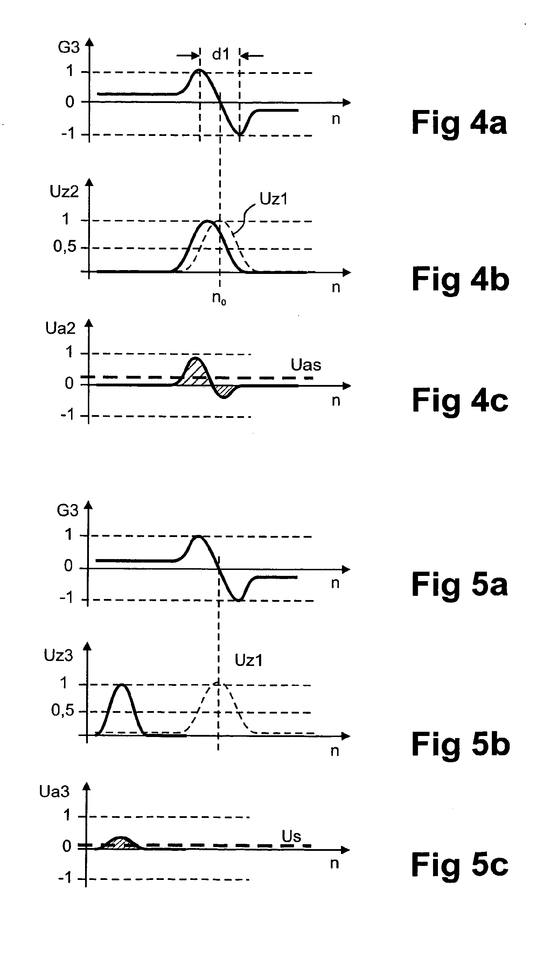

Durch Differenzierung von U_{Z1} wird der Gewichtungsverlauf G1 in der Nähe von Tastweiten beschrieben. Um weiter entfernt auftreffende Empfangslichtstrahlen 4 berücksichtigen zu können, die z.B. durch ein im Nahbereich eintauchendes Objekt 6 entstehen, wird nach Figur 3c der Anteil G2 ergänzt. Die Gewichtungsfunktion G3 Figur 4a ergibt sich aus der Summe G1+G2.

Die Figuren 3b, 3c zeigen aus dem Signalverlauf der Ausgangssignale gemäß Figur 3a abgeleitete Gewichtungsverläufe G1, G2, aus welchen die Gewichtungsfunktion gebildet wird. Die Ausgangssignale bilden eine diskrete Folge von Signalwerten für die einzelnen Empfangselemente 5a. Durch Interpolation zwischen diesen Funktionswerten entstehen für die daraus abgeleiteten Gewichtungsverläufe sowie die hieraus gewonnene Gewichtungsfunktion kontinuierliche Funktionen wie in den Figuren 3a-3c dargestellt.

Der in Figur 3b dargestellte Gewichtungsverlauf G1 entsteht durch Differenzierung des Verlaufs der Ausgangssignale U_{Z1}. Dementsprechend wird bei der Position des Maximums der Ausgangssignale der Nulldurchgang des Gewichtungsverlaufs erhalten. Im Bereich der Breite d1 des Signalpeaks von U_{Z1} weist der Gewichtungsverlauf G1 positive beziehungsweise negative Werte auf, außerhalb hiervon sind die Werte von G1 null.

Um auch außerhalb des Bereichs d1 endliche Werte für die Gewichtungsfunktion zu erhalten, wird zu dem Gewichtungsverlauf G1 der empirisch bestimmte Gewichtungsverlauf G2 gemäß Figur 3b addiert.

Die daraus erhaltene Gewichtungsfunktion G3 = G1 + G2 ist in Figur 4a dargestellt. Der Nulldurchgang der Gewichtungsfunktion liegt im Zentrum des Signalpeaks von U_{Z1} und definiert daher die Tastweite. Diese Tastweite begrenzt den Distanzbereich, innerhalb dessen Objekte 6 erfasst werden sollen zu großen Distanzen hin, das heißt im vorliegenden Fall erfolgt durch die Vorgabe der Gewichtungsfunktion eine Hintergrundunterdrückung, da nur Objekte 6 erfasst werden, deren Distanzen zur optoelektronischen Vorrichtung 1 kleiner als die Tastweite sind.

Zur Objektdetektion werden während des auf den Einlernvorgang folgenden Messbetriebs die Ausgangssignale der Empfangselemente 5a mit der Gewichtungsfunktion G3 gewichtet. Dabei wird das Ausgangssignal jedes Empfangselements 5a mit einem Gewichtungsfaktor gewichtet, das heißt multipliziert, der dem Funktionswert der Gewichtungsfunktion an der Position des jeweiligen Empfangselements 5a entspricht. Da die im Einlernvorgang abgeleitete Gewichtungsfunktion eine kontinuierliche Funktion darstellt, kann deren Nulldurchgang an beliebigen Positionen zwischen zwei Empfangselementen 5a liegen, das heißt die Genauigkeit der Lage des Nulldurchgangs der Gewichtungsfunktion und damit die Bestimmung der Tastweite ist nicht durch die diskrete Anordnung der Empfangselemente 5a begrenzt. Dies bedeutet, dass eine Subpixelauflösung bei der Bestimmung der Tastweite erhalten wird.

Entsprechend dem Verlauf der Gewichtungsfunktion G3 in Figur 4a werden beim Messbetrieb die Empfangselemente 5a im Bereich d1 am stärksten gewichtet, da dort die Gewichtungsfunktion betragsmäßig die höchsten Werte annimmt. Durch die Addition des Gewichtungsverlaufs G2 zum Gewichtungsverlauf G1 sind die Werte der Gewichtungsfunktion G3 außerhalb von d1 von Null verschieden, so dass auch die mit diesem Gewichtungsfaktor gewichteten Ausgangssignale der Empfangselemente 5a noch zur Generierung des Schaltsignals beitragen. Da dort die Werte der Gewichtungsfunktion G3 jedoch kleiner sind als die Werte der Gewichtungsfunktion G3 im Bereich d1 tragen diese Empfangselemente 5a weniger stark zur Generierung des Schaltsignals bei. Durch die schwächere Gewichtung der Empfangselemente 5a außerhalb des Bereichs d1 können insbesondere Störeinflüsse durch Fremdlichteinstrahlungen reduziert werden.

Die Gewichtungsfunktion G3 ist so gewählt, dass die Summen derer Funktionswerte zumindest näherungsweise Null ergeben. Für Empfangselemente 5a n<n₀, wobei n₀ die Lage des Nulldurchgangs von G3 ist, nehmen die Gewichtungsfaktoren, beziehungsweise die Funktionswerte der Gewichtungsfunktionen G3 positive Werte an, bei Werten n>n₀ dagegen negative Werte.

Zur Generierung des Schaltsignals werden die bei einer Objektdetektion registrierten und mit der Gewichtungsfunktion G3 gewichteten Ausgangssignale aufsummiert. Die so gebildete Summe wird im Komparator 12 mit einem Schwellwert verglichen, der im vorliegenden Fall den Wert Null annimmt.

Damit nimmt das Schaltsignal den Schaltzustand "Objekt vorhanden" ein, wenn die Summe oberhalb des Schwellwerts liegt. Liegt die Summe bei negativen Werten, so nimmt das Schaltsignal den Schaltzustand "kein Objekt vorhanden" ein.

Die Figuren 4a-c und 5a-c zeigen zwei unterschiedliche Objektdetektionen, die mit der Gewichtungsfunktion G3 erhalten werden.

Dabei ist in den Figuren 4a, 5a jeweils der Verlauf der Gewichtungsfunktion G3 dargestellt. Die Figuren 4b, 5b zeigen jeweils die Ausgangssignale der Empfangselemente 5a (U_{Z2}, U_{Z3}), die bei der jeweiligen Messung mit der optoelektronischen Vorrichtung 1 gegen ein Objekt 6 erhalten werden. Die Figuren 4c, 5c zeigen jeweils die mit der Gewichtungsfunktion G3 gerichteten Ausgangssignale (Uₐ₂, Uₐ₃) sowie die daraus abgeleitete Summe dieser Signale (Uₐ₃).

Figur 4b zeigt ein Beispiel eines Messsignalverlaufs Uz2 bei der Detektion eines Objektes 6 in einem Abstand dicht unterhalb der Tastweite. Dementsprechend ist das Messsignal Uz2 geringfügig zum Teachsignal Uz1 (gestrichelt) versetzt. Die Multiplikation (Gewichtung) der Gewichtungsfunktion G3 mit dem Messsignalverlauf Uz2 ergibt den Signalverlauf Ua2, der aufsummiert die Summenspannung Uas ergibt, wie in Figur 4c gezeigt. Bei kleinsten Distanzabweichungen des Objektes 6 zur Tastweite hin ergeben sich positive Summenspannungen Uas, das heißt das Objekt 6 wird sicher erkannt, da die Summe Uas = Σ (G3*Uz2) bei Uas > 0, das heißt oberhalb des Schwellwerts des Komparators 12 liegt.

Figur 5 zeigt ein Beispiel eines Messsignalverlaufs, bei der Detektion eines Objekts 6, das in einem deutlich unterhalb der Tastweite liegenden Abstand zur optoelektronischen Vorrichtung 1 angeordnet ist. Dementsprechend ist das Messsignal Uz3 deutlich zum Teachsignal Uz1 (gestrichelt) versetzt. Trotz der Absenkung der Gewichtungsfunktion G3 im Nahbereich ergibt sich ein eindeutig positives Signal Uas, das heißt das Objekt 6 wird sicher erkannt.

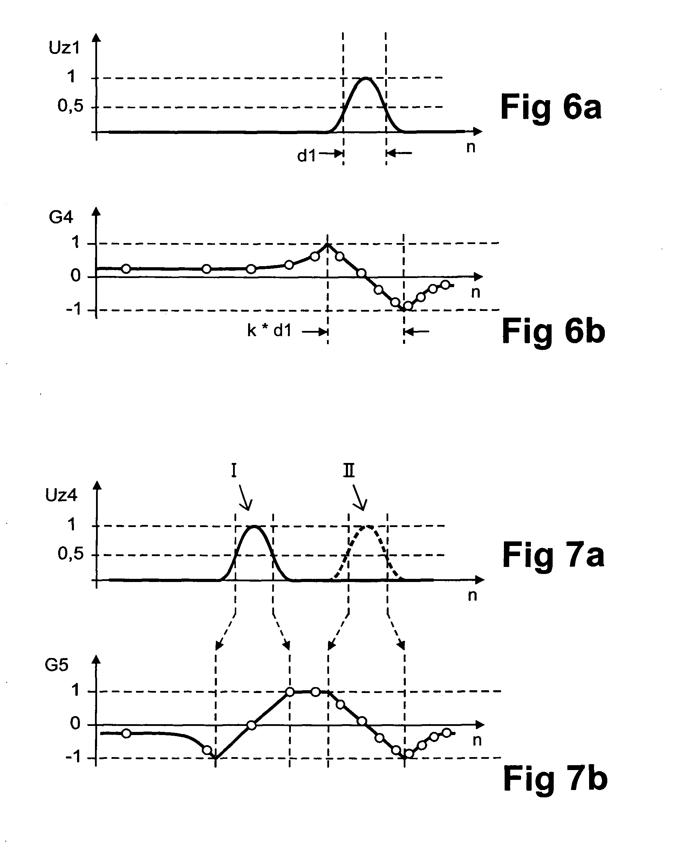

Figur 6 zeigt ein Beispiel, wie aus dem beim Teachvorgang ermittelten Messsignalverlauf Uz1 in Figur 6a eine Gewichtungsfunktion G4 in Figur 6b dadurch gewonnen wird, dass der Bereich d1 um den Faktor k symmetrisch erweitert und durch ein Geradenstück gebildet wird. Die seitlich benachbarten Bereiche werden durch stetig verlaufende Kurvenstücke gebildet, die auf einen Mindestwert absinken.

Die Figuren 7a, 7b zeigen eine Erweiterung der Ausführungsformen gemäß den Figuren 3 - 6 dahingehend, dass eine Gewichtungsfunktion G5 derart bestimmt wird, dass durch diese ein Distanzbereich, innerhalb derer Objekte 6 erfasst werden, definiert wird, der durch eine obere und untere Tastweite begrenzt wird. Bei dieser Ausführungsform erfolgt somit eine Vordergrund- und Hintergrundausblendung, da Objekte 6 in Distanzen unterhalb der unteren Tastweite und in Distanzen oberhalb der oberen Tastweite ausgeblendet werden, das heißt nur bei Detektion von Objekten 6 im Distanzbereich zwischen den beiden Tastweiten wird ein Schaltsignal mit dem Schaltzustand "Objekt erkannt" generiert.

Hierzu werden im vorliegenden Fall zwei Einlernvorgänge durchgeführt, wobei im ersten Einlernvorgang ein Objekt 6 detektiert wird, das in einem der unteren Tastweite entsprechenden Abstand zur optoelektronischen Vorrichtung 1 angeordnet ist und im zweiten Einerlernvorgang ein Objekt 6 detektiert wird, das in einem der oberen Tastweite entsprechenden Abstand zur optoelektronischen Vorrichtung 1 angeordnet ist. Die bei dem Einlernvorgang erhaltenen Ausgangssignale (Uz4) der Empfangselemente 5a sind in Figur 7a dargestellt. Der Signalpeak bei I stammt von der Detektion des Objekts 6 in der unteren Tastweite, der Signalpeak bei II stammt von der Detektion des Objekts 6 in der oberen Tastweite. Die Ableitung der Gewichtungsfunktion G5 (Figur 7b) aus dem Verlauf der Ausgangssignale der Empfangselemente 5a erfolgt analog zu den Ausführungsbeispielen gemäß den Figuren 3 bis 6.

Da nun die Ausgangssignale zwei Signalpeaks aufweisen, weist die Gewichtungsfunktion G5 nunmehr zwei Nulldurchgänge auf, die die Lage der unteren und oberen Tastweite definieren.

Im auf den Einlernvorgang folgenden Messbetrieb der optoelektronischen Vorrichtung 1 werden die aktuellen Ausgangssignale der Empfangselemente 5a mit der Gewichtungsfunktion G5 gewichtet. Die Summe der gewichteten Ausgangssignale wird im Komparator 12 wieder mit dem bei Null liegenden Schwellwert bewertet. Ein Objekt 6 in dem von der Tastweite begrenzten Distanzbereich gilt als erkannt, wenn die Summe positive Werte annimmt.

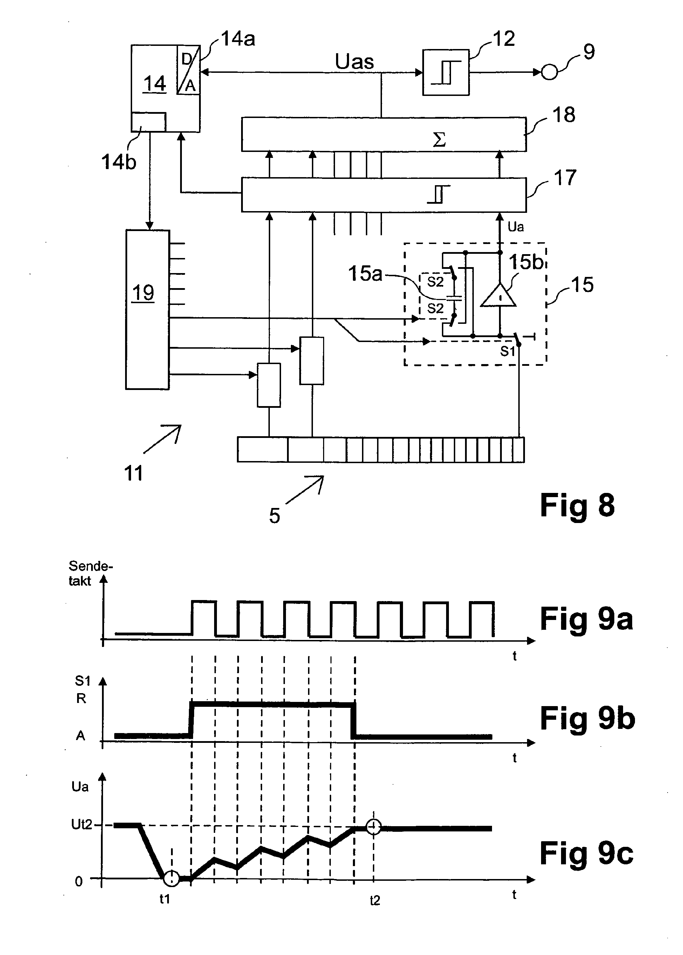

Figur 8 zeigt ein erstes Ausführungsbeispiel der Schaltungskomponenten zur Ansteuerung des Senders 2 und zur Auswertung der Ausgangssignale der Empfangselemente 5a des Empfängers 5 der optoelektronischen Vorrichtung 1 gemäß Figur 1.

Die Signalverarbeitungseinheit 11 besteht aus einem Schaltnetzwerk, welches von der Steuereinheit 14 über einen Multiplexer 19 angesteuert wird. Als erste Komponenten der Signalverarbeitungseinheit 11 sind Ladungsspeicher 15 vorgesehen, wobei jeder Ausgang eines Empfangselements 5a auf einen solchen Ladungsspeicher 15 geführt ist. Der Übersichtlichkeit halber ist nur für den Ladungsspeicher 15, der an das letzte Empfangselement 5a angeschlossen ist, dessen Aufbau detailliert dargestellt ist. Die ersten beiden Ladungsspeicher 15 sind in einer black-box-Darstellung dargestellt. Die restlichen Ladungsspeicher 15 sind aus Gründen der Übersichtlichkeit nicht dargestellt.

Wie aus Figur 8 ersichtlich, weist jeder Ladungsspeicher 15 einen Kondensator 15a und einen Verstärker 15b auf. Diese Komponenten sind über einen Schalter S1 und zwei Schalter S2 schaltbar. Die Ausgangsspannungen Ua werden auf jeweils einen Komparator 17 geführt. Die Anordnung der Komparatoren 17 bilden einen weiteren Bestandteil der Signalverarbeitungseinheit 11. Die Ausgangssignale der Komparatoren 17 werden in einem Summierglied 18 summiert. Das dort gebildete Summensignal wird zur Generierung des Schaltsignals auf den Komparator 12 geführt. Der Komparator 12 berücksichtigt eine Hysterese beim Schalten zwischen den Schaltzuständen des Schaltsignals, das über den Schaltausgang 9 ausgegeben wird. Das Summensignal am Ausgang des Summierglieds 18 wird zudem in die Steuereinheit 14 über einen dort integrierten Digital-Analog-Wandler 14a eingelesen. Zur Ausgabe von Steuersignalen in den Multiplexer ist in der Steuereinheit 14 ein zweiter Digital-Analog-Wandler 14b vorgesehen. Die während des Einlernvorgangs ermittelte Gewichtungsfunktion wird von der Steuereinheit 14 in die Signalverarbeitungseinheit 11 eingegeben. Hierzu werden vor Beginn des Einlernvorgangs die Inhalte der Ladungsspeicher 15 in die Steuereinheit 14 ausgelesen. Nach Bestimmung der Gewichtungsfunktion wird diese von der Steuereinheit 14 in die einzelnen Ladungsspeicher 15 ausgelesen. In diesem Fall werden die Gewichtungsfaktoren für die einzelnen Empfangselemente 5a derart vorgegeben, dass entsprechend dem Wert des jeweiligen Gewichtungsfaktors für ein Empfangselement 5a Integrationszeit des zugeordneten Ladungsspeichers 15 in entsprechender Weise vorgegeben wird, das heißt entsprechend dem Gewichtungsfaktor der einzelnen Empfangselemente 5a erfolgt eine unterschiedlich lange Integration deren Ausgangssignale in den zugeordneten Ladungsspeichern 15.

Dabei wird in jedem Ladungsspeicher 15 mit dem Schalter S1, der von der Steuereinheit 14 aus gesteuert wird, die Integration des Ausgangssignals in dem jeweiligen Ladungsspeicher 15 gestartet. Der Integrationsvorgang wird beendet, sobald das Ausgangssignal des Ladungsspeichers 15 den durch den zugeordneten Komparator 17 vorgegebenen Schwellwert überschreitet.

Die Figuren 9a-c zeigen die Zeitdiagramme einer ersten Ausführungsform einer solchen Integration. Dabei werden im vorliegenden Fall vom Sender 2 Sendelichtstrahlen 3 in Form von Sendepulsen mit vorgegebenem Puls-Pausen-Verhältnis emittiert. Figur 9a zeigt den Sendetakt, das heißt das Zeitdiagramm der vom Sender 2 emittierten Sendepulse.

Mit Hilfe des Schalters S1 (Ruhekontakt) eines Ladungsspeichers 15 wird die Integration zum Zeitpunkt t1 gestartet und entsprechend der Gewichtungsfunktion zum Zeitpunkt t2 gestoppt. Die Integrationszeit ist daher bestimmt durch die Gewichtungsfunktion, die im Einlernvorgang definiert wird. Figur 9b zeigt den zeitlichen Verlauf des Schaltzustands des Schalters S1.

Figur 9c zeigt die dadurch erhaltene Integration des Ausgangssignals eines Empfangselements 5a des Empfängers 5. Vor dem Start des Messvorgangs wird der Ladungsspeicher 15 entladen. Während des Anstehens eines Sendepulses wird der Fotostrom aufintegriert, dagegen wird in einer Sendepause des Senders 2 durch Umschalten der Schalter S2 der Kondensator 15a des Ladungsspeichers 15 umgepolt, wodurch der durch das Umgebungslicht generierte Fotostrom abintegriert wird. Das Abintegrieren erfolgt zur Elimination von Fremdlichteinflüssen. Da während der Sendepulse eine Aufintegration und während der Sendepausen eine Abintegration erfolgt, werden das Umgebungslicht, das heißt, die dadurch generierten Signale, wechselweise auf- und abintegriert und dadurch nahezu vollständig eliminiert, während durch das Nutzlicht generierte Signale nur in den Sendephasen aufintegriert werden und so zur Auswertung herangezogen werden.

Die Figuren 10a-c zeigen eine zweite Variante von Integrationsvorgängen in einem Ladungsspeicher 15 über mehrere Schaltzyklen des Schalters S1. Figur 10a zeigt wieder den Sendetakt des Senders 2.

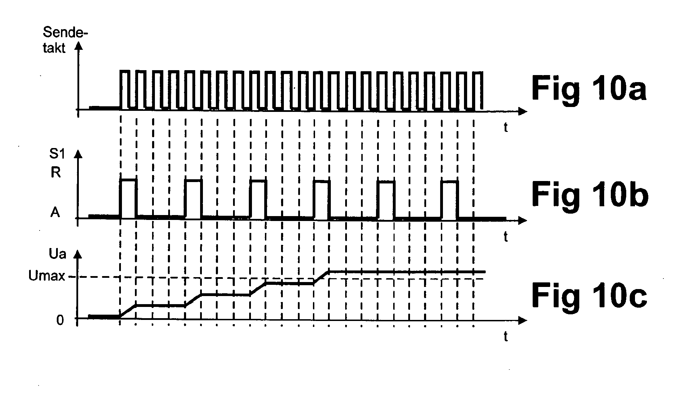

Figur 10b zeigt das Diagramm für das Aktivieren des Ladevorganges durch S1. Dabei ist das Verhältnis des Zustandes "integrieren" zu "Ladung konstant halten" bestimmt durch den für diese Zelle maßgeblichen Wert der Gewichtungsfunktion. Überschreitet die Ausgangsspannung Ua, wie in Figur 10c gezeigt, den Schwellwert Uₘₐₓ des Komparators 17, wird der Ladevorgang durch die Auswerteeinheit gestoppt. Die Aufteilung der Aktivierung über die gesamte Integrationszeit ermöglicht den Abbruch in einer laufenden Messung und erübrigt eine zusätzliche Messung zur Ermittlung der Integrationszeit.

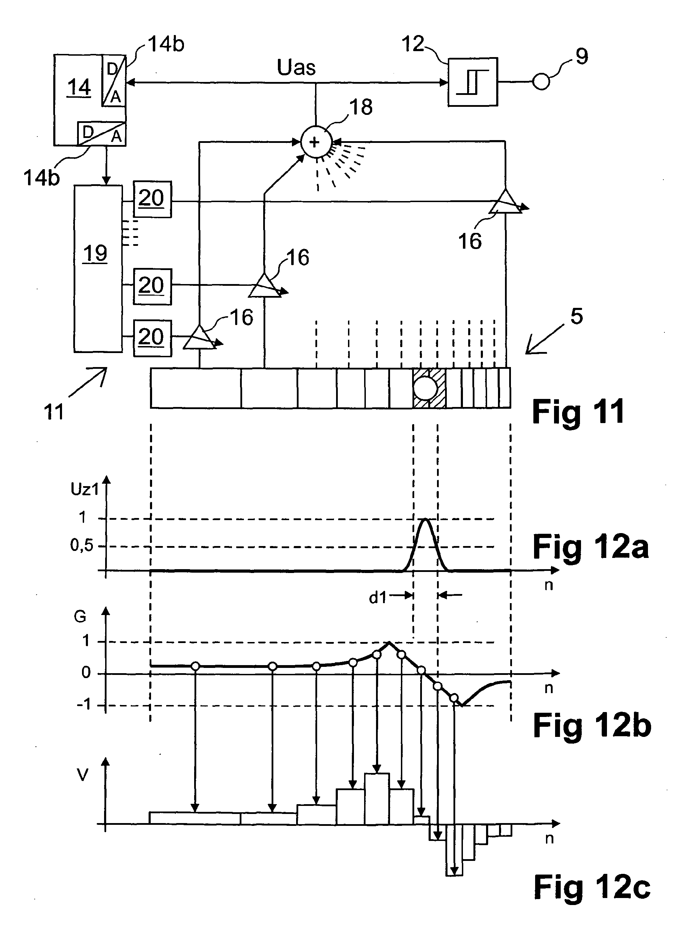

Figur 11 zeigt eine weiteres Ausführungsbeispiel Auswerteelektronik der optoelektronischen Vorrichtung 1, gemäß Figur 1. Die Anordnung gemäß Figur 11 entspricht weitgehend der Anordnung gemäß Figur 8. Lediglich die Ladungsspeicher 15 sind durch einstellbare Verstärker 16 ersetzt. Die Verstärker 16 werden über den Multiplexer und diesem nachgeordnete Sample & Hold-Glieder 20 angesteuert. Die Ausgänge der einstellbaren Verstärker 16 sind direkt auf das Summierglied 18 geführt. Entsprechend dem Beispiel von Figur 8 werden die Verstärkungen entsprechend der Gewichtungsfunktion G eingestellt.

Während des Einlernvorgangs werden nacheinander die Spannungen, das heißt Ausgangssignale der Empfangselemente 5a dadurch aufgenommen, dass die Verstärkung des entsprechenden Verstärkers 16 auf 1 und alle anderen auf 0 gesetzt wird. Dieser Vorgang bildet das serielle Auslesen einer Empfängerzeile nach, wie es nach dem Stand der Technik bekannt ist. Nach m Belichtungen, wobei m die Anzahl der Empfangselemente 5a des Empfängers 5 ist, liegt der Signalverlauf der Ausgangssignale der Empfangselemente 5a in der Steuereinheit 14 vor.

Für dieses Ausgangssignal wird die Gewichtungsfunktion entsprechend der Ausführungsbeispiele gemäß den Figuren 3 bis 6 berechnet.

Zur Gewichtung der Ausgangssignale der Empfangselemente 5a während des auf dem Einlernvorgang werden wie in den Figuren 12b und 12c dargestellt, jedem Verstärker 16 entsprechend der Gewichtungsfunktion G individuelle Verstärkungen V zugewiesen.

Nachdem die Verstärkungen eingestellt wurden, liefert das Teachsignal eine Summenspannung Uas, die noch geringfügig von Null abweicht. Im folgenden Abgleichschritt werden die beiden Verstärkungen, die beim Einlernvorgang die höchsten Werte geliefert haben, iterativ so lange gegenläufig verstellt, bis sich Uas = 0 einstellt.

### Bezugszeichenliste

- (1): Optoelektronische Vorrichtung
- (2): Sender
- (3): Sendelichtstrahlen
- (4): Empfangslichtstrahlen
- (5): Empfänger
- (5a): Empfangselement
- (6): Objekt
- (7): Sendeoptik
- (8): Empfangsoptik
- (9): Schaltausgang
- (10): Parametrierschnittstelle
- (11): Signalverarbeitungseinheit
- (12): Komparator
- (13): Empfangslichtfleck
- (14): Steuereinheit
- (14a): Digital-Analog-Wandler
- (14b): Digital-Analog-Wandler
- (15): Ladungsspeicher
- (15a): Kondensator
- (15b): Verstärker
- (16): Verstärker
- (17): Komparator
- (18): Summierglied
- (19): Multiplexer
- (20): Sample & Hold-Glieder

## Patentansprüche

1. Optoelektronische Vorrichtung mit einem Sendelichtstrahlen emittierenden Sender und einem Empfangslichtstrahlen empfangenden, aus einer Anordnung von Empfangselementen bestehenden Empfänger, wobei der Auftreffpunkt der von einem Objekt als Empfangslichtstrahlen rückreflektierten Sendelichtstrahlen auf den Empfangselementen des Empfängers ein Maß für die Objektdistanz darstellt, **dadurch gekennzeichnet, dass** die Ausgangssignale der Empfangselemente (5a) mit einer Gewichtungsfunktion gewichtet werden, und dass die Summe der gewichteten Ausgangssignale zur Generierung eines binären Schaltsignals mit einem Schwellwert bewertet wird.

2. Optoelektronische Vorrichtung nach Anspruch 1, **dadurch gekennzeichnet, dass** die Schaltzustände des Schaltsignals angeben, ob sich ein Objekt (6) innerhalb eines wenigstens von einer Tastweite begrenzten Distanzbereichs befindet oder nicht.

3. Optoelektronische Vorrichtung nach Anspruch 2, **dadurch gekennzeichnet, dass** die oder jede Tastweite durch einen Nulldurchgang der Gewichtungsfunktion definiert ist.

4. Optoelektronische Vorrichtung nach einem der Ansprüche 1 bis 3, **dadurch gekennzeichnet, dass** zur Bildung der Gewichtungsfunktion die Ausgangssignale der Empfangselemente (5a) jeweils mit einem Gewichtungsfaktor gewichtet werden, und dass diese gewichteten Ausgangssignale Stützstellen bilden, zwischen welchen eine Interpolation zur Generierung der Gewichtungsfunktion durchgeführt wird.

5. Optoelektronische Vorrichtung nach einem der Ansprüche 1 bis 4, **dadurch gekennzeichnet, dass** die Gewichtungsfunktion in wenigstens einem Einlernvorgang bestimmt wird.

6. Optoelektronische Vorrichtung nach Anspruch 5, **dadurch gekennzeichnet, dass** in dem oder in jedem Einlernvorgang ein in einer Tastweite angeordnetes Objekt (6) detektiert wird.

7. Optoelektronische Vorrichtung nach Anspruch 6, **dadurch gekennzeichnet, dass** die Gewichtungsfunktion aus dein Verlauf der bei dem Einlernvorgang erhaltenen Ausgangssignale der Empfangselemente (5a) abgeleitet wird.

8. Optoelektronische Vorrichtung nach Anspruch 7, **dadurch gekennzeichnet, dass** die Gewichtungsfunktion zumindest näherungsweise dem Differential des Verlaufs des Ausgangssignals der Empfangselemente (5a) entspricht.

9. Optoelektronische Vorrichtung nach einem der Ansprüche 1 bis 8, **dadurch gekennzeichnet, dass** jedem Empfangselement (5a) ein Ladungsspeicher (15) nachgeordnet ist, in welchem das Ausgangssignal des Empfangselements (5a) integriert wird, wobei die Integrationszeit entsprechend dem dem Empfangselement (5a) zugeordneten Gewichtungsfaktor vorgegeben ist.

10. Optoelektronische Vorrichtung nach Anspruch 9, **dadurch gekennzeichnet, dass** der Ausgang jedes Ladungsspeichers (15) auf einen Komparator (17) geführt ist, wobei die Integration des Ausgangssignals des jeweiligen Empfangselements (5a) im Ladungsspeicher (15) beendet wird, sobald dessen Ausgangssignal den Schwellwert des Komparators (17) überschreitet.

11. Optoelektronische Vorrichtung nach Anspruch 9, **dadurch gekennzeichnet, dass** die Ausgangssignale der Empfangselemente (5a) parallel auf die Ladungsspeicher (15) ausgelesen und die Signale der Ladungsspeicher (15) parallel auf die Komparatoren (17) geführt sind.

12. Optoelektronische Vorrichtung nach Anspruch 10, **dadurch gekennzeichnet, dass** die Ausgänge der Komparatoren (17) parallel auf ein Summierglied (18) geführt sind.

13. Optoelektronische Vorrichtung nach Anspruch 13, **dadurch gekennzeichnet, dass** das im Summierglied (18) gebildete Summensignal der Signale aus den Ausgängen der Komparatoren (17) auf einen Komparator (12) zur Generierung des Schaltsignals geführt ist.

14. Optoelektronische Vorrichtung nach einem der Ansprüche 1 bis 8, **dadurch gekennzeichnet, dass** die Ausgangssignale des Empfangselements (5a) jeweils auf einen Verstärker (16) geführt sind, wobei dessen Verstärkungsfaktor entsprechend dem dem Empfangselement (5a) zugeordneten Gewichtungsfaktor vorgegeben ist.

15. Optoelektronische Vorrichtung nach Anspruch 14, **dadurch gekennzeichnet, dass** die Vorgabe der Verstärkungsfaktoren über eine Steuereinheit (14) erfolgt.

16. Optoelektronische Vorrichtung nach einem der Ansprüche 14 oder 15, **dadurch gekennzeichnet, dass** die Ausgänge der Verstärker (16) auf ein Summierglied (18) geführt sind, dessen Ausgang auf einen Komparator (12) zur Generierung des Schaltsignals geführt ist.

17. Optoelektronische Vorrichtung nach einem der Ansprüche 1 bis 16, **dadurch gekennzeichnet, dass** die Empfangselemente (5a) des Empfängers (5) und die Komponenten zur Auswertung deren Ausgangssignale auf einem ASIC integriert sind.
